# EUROPEAN PATENT APPLICATION

(11) **EP 4 525 523 A1**
(43) Date of publication of application: **19.03.2025**
(21) Application number: 23825764.6
(22) Date of filing: 01.02.2023
(51) Int. Cl.: H04W 40/02

(54) **COMMUNICATION METHOD AND RELATED APPARATUS**

(30) Priority: 21.06.2022 CN 202210706964
(71) Applicant: Huawei Technologies Co., Ltd., Shenzhen, Guangdong 518129 (CN)
(72) Inventor: XUE, Yifei, Shenzhen, Guangdong 518129 (CN); LI, Hancheng, Shenzhen, Guangdong 518129 (CN); WANG, Yan, Shenzhen, Guangdong 518129 (CN); HU, Weihua, Shenzhen, Guangdong 518129 (CN)
(74) Representative: Pfenning, Meinig & Partner mbB
(86) International application number: PCT/CN2023/074073
(87) International publication number: WO 2023/246104

(57) **Abstract**

This application provides a communication method and a related apparatus, to help maintain affinity of a data flow of a same application in a scenario in which a terminal device moves. The method includes: The terminal device sends a first request message to a first device, where the request message includes a first identifier, and the first identifier identifies a type of an application that the terminal device requests to access; and the first device sends a second request message to a second device based on an identifier of the terminal device, the first identifier, and a first mapping relationship, where the second request message includes a second identifier, the second device and the second identifier are determined based on the first mapping relationship, the first mapping relationship indicates a correspondence between the identifier of the terminal device, the first identifier, the second identifier, and the second device, the second identifier identifies that access of the terminal device to a target server is continuous access, and the target server is a server that processes the request message.

## Description

This application claims priority to Chinese Patent Application No. 202210706964.2, filed with the China National Intellectual Property Administration on June 21, 2022 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

With maturity and large-scale deployment of a 5th generation mobile communication technology (5th generation mobile communication technology, 5G), to give play to features of low latency and high bandwidth in a wide-area coverage scenario, edge computing needs to be widely deployed to reduce end-to-end service latency. How to efficiently and quickly switch between a plurality of nodes and ensure availability and continuity of a computing power service becomes a focus of a technical implementation. Computing first networking (computing first networking, CFN) is new architecture, new protocol, and new technology exploration oriented to convergence of computing and networking. The CFN enables interconnection and collaboration of large-scale edge computing nodes and adapts to service dynamics, to implement optimal service access and load balancing.

Generally, the CFN may publish a computing capability and a network state of a current network to each node in the network. When a data flow reaches the CFN, the CFN may determine a computing node based on a computing capability and a network state of the network, to forward, based on a correspondence between a quintuple and the computing node and a correspondence between the quintuple and a server, a data flow of a same application to a same server for processing, so as to ensure affinity of the data flow of the application.

However, in a mobile network, as a terminal moves geographically, both an internet protocol address (internet protocol address, IP address) and an access node of the terminal device may change. Consequently, it cannot be ensured that a data flow of a same application is routed to an original server for processing. In other words, in a scenario in which the terminal device moves, affinity of the data flow of the same application deteriorates.

### SUMMARY

This application provides a communication method and a related apparatus, to help maintain affinity of a data flow of a same application in a scenario in which a terminal device moves.

According to a first aspect, a communication method is provided, and is applied to a first device. The method includes: receiving a first request message from a terminal device, where the first request message includes a first identifier, and the first identifier identifies a type of an application that the terminal device requests to access; and sending a second request message to a second device based on an identifier of the terminal device, the first identifier, and a first mapping relationship, where the second request message includes a second identifier, the second device and the second identifier are determined based on the first mapping relationship, the first mapping relationship indicates a correspondence between the identifier of the terminal device, the first identifier, the second identifier, and the second device, the second identifier identifies that access of the terminal device to a target server is continuous access, and the target server is a server that processes the request message.

Based on this, the first device routes, based on the identifier of the terminal device, the first identifier in the request message, and the first mapping relationship predetermined by the first device, request messages that carry the same first identifier to the same second device for processing, and includes the second identifier in the forwarded request messages. In this way, the second device routes, based on a predetermined second mapping relationship and the second identifier, the request messages to the same server for processing, to help maintain affinity of data flows in the request messages.

For example, the first identifier may be a SID, and different applications may use different SID identifiers.

With reference to the first aspect, in some implementations of the first aspect, before the receiving a first request message from a terminal device, the method further includes: receiving a third request message from the terminal device, where the third request message includes the first identifier; determining the second identifier based on the first identifier; determining the second device based on the first identifier, computing power information, and network information; and sending a fourth request message to the second device, where the fourth request message includes the second identifier.

With reference to the first aspect, in some implementations of the first aspect, the determining the second identifier based on the first identifier includes: determining the second identifier based on the first identifier and first preconfiguration information, where the first preconfiguration information indicates a correspondence between a continuously accessed application and a type of the application; or determining the second identifier based on the first identifier, the identifier of the terminal device, and second preconfiguration information, where the second preconfiguration information indicates a correspondence between a continuously accessed application, a type of the application, and the terminal device.

With reference to the first aspect, in some implementations of the first aspect, the first mapping relationship is from a session management function (session management function, SMF), and the SMF is an SMF serving the terminal device; or the first mapping relationship is from a third device, and the third device is a device to which the terminal device is connected when the terminal device accesses the target server last time.

With reference to the first aspect, in some implementations of the first aspect, the identifier of the terminal device includes a media access control (media access control, MAC) address of the terminal device, an international mobile equipment identity (international mobile equipment identity, IMEI) of the terminal device, a subscription permanent identifier (subscription permanent identifier, SUPI) of the terminal device, or an identifier of a protocol data unit (protocol data unit, PDU) session used by the terminal device to access the target server.

The first request message in the first aspect may be, for example, corresponding to a request message 1 in the following shown embodiment. The second request message in the first aspect may be, for example, corresponding to a request message 2 in the following shown embodiment. The third request message in the first aspect may be, for example, corresponding to a request message 3 in the following shown embodiment. The fourth request message in the first aspect may be, for example, corresponding to a request message 4 in the following shown embodiment.

According to a second aspect, a communication method is provided, and is applied to a terminal device. The method includes: generating a first request message, where the first request message includes a second identifier, the second identifier identifies that access of the terminal device to a target server is continuous access, and the target server is a server that processes the request message; and sending the first request message to a first device.

Based on this, the second identifier is carried in the request message generated by the terminal device, so that a device that identifies the identifier can route, based on a prestored mapping relationship, request messages that carry a same first identifier to a same second device for processing, and include the second identifier in the forwarded request messages. In this way, the second device routes, based on a predetermined second mapping relationship and the second identifier, the request messages to the same server for processing, to ensure affinity of data flows in the request messages.

With reference to the second aspect, in some implementations of the second aspect, the method further includes: receiving a first message, where the first message indicates that an application identified by using the first identifier is a continuously accessed application; determining the second identifier based on an identifier of the terminal device and the first message; generating a second request message, where the second request message includes the first identifier and the second identifier, and the first identifier identifies a type of an application that the terminal device requests to access; and sending the second request message to the first device.

According to a third aspect, a communication method is provided, and is applied to a first device. The method includes: receiving a first request message from a terminal device, where the first request message includes a second identifier, the second identifier identifies that access of the terminal device to a target server is continuous access, and the target server is a server that processes the request message; and sending the first request message to a second device based on the second identifier and a third mapping relationship, where the third mapping relationship indicates a correspondence between the second identifier and the second device.

Based on this, the second identifier is carried in the received request message, so that the first device that identifies the identifier can route, based on the prestored mapping relationship, request messages that carry a same first identifier to the same second device for processing, and include the second identifier in the forwarded request messages. In this way, the second device routes, based on a predetermined second mapping relationship and the second identifier, the request messages to the same server for processing, to ensure affinity of data flows in the request messages.

With reference to the third aspect, in some implementations of the third aspect, the method further includes: receiving a second request message from the terminal device, where the second request message includes the first identifier and the second identifier, and the first identifier identifies a type of an application that the terminal device requests to access; determining the second device based on the first identifier, computing power information, and network information; and sending the second request message to the second device.

With reference to the third aspect, in some implementations of the third aspect, the third mapping relationship is from an SMF, and the SMF is an SMF serving the terminal device; or the third mapping relationship is from a third device, and the third device is a device to which the terminal device is connected when the terminal device accesses the target server last time.

The first request message in the second aspect and the third aspect may be, for example, corresponding to a request message 5 in the following shown embodiment. The second request message in the second aspect and the third aspect may be, for example, corresponding to a request message 6 in the following shown embodiment.

According to a fourth aspect, a communication method is provided, and is applied to a second device. The method includes: receiving a second request message from a first device, where the second request message includes a second identifier, the second identifier identifies that access of a terminal device to a target server is continuous access, and the target server is a server that processes the request message; and sending the second request message to the target server based on the second identifier and a second mapping relationship, where the second mapping relationship indicates a correspondence between the second identifier and the target server.

Based on this, the second identifier is carried in the received request message, so that the second device that identifies the identifier can route, based on the prestored mapping relationship, request messages that carry a same first identifier to the same server for processing, to ensure affinity of data flows in the request messages.

With reference to the fourth aspect, in some implementations of the fourth aspect, the method further includes: receiving a fourth request message from the first device, where the fourth request message includes the first identifier and the second identifier, and the first identifier identifies a type of an application that the terminal device requests to access; determining the target server based on the first identifier, computing power information, and network information; and sending the fourth request message to the target server.

The second request message in the fourth aspect may be, for example, corresponding to a request message 2 or a request message 5 in the following shown embodiment. The fourth request message in the fourth aspect may be, for example, corresponding to a request message 4 or a request message 6 in the following shown embodiment.

According to a fifth aspect, a communication apparatus is provided, and is configured to perform the method according to any possible implementation of any one of the foregoing aspects. Specifically, the apparatus includes a module configured to perform the method according to any possible implementation of any one of the foregoing aspects.

In a design, the apparatus may include a module that is in one-to-one correspondence with the method/operation/step/action described in any one of the foregoing aspects. The module may be a hardware circuit, or may be software, or may be implemented by a hardware circuit in combination with software.

In another design, the apparatus is a communication chip. The communication chip may include an input circuit or an interface configured to send information or data, and an output circuit or an interface configured to receive information or data.

In another design, the apparatus is a communication device. The communication device may include a transmitter configured to send information or data and a receiver configured to receive information or data.

In another design, the apparatus is configured to perform the method according to any possible implementation of any one of the foregoing aspects. The apparatus may be configured in a first device, a second device, or a terminal device, or the apparatus is the foregoing first device, the foregoing second device, or the foregoing terminal device.

According to a sixth aspect, a processor is provided, and includes an input circuit, an output circuit, and a processing circuit. The processing circuit is configured to: receive a signal through the input circuit, and transmit the signal through the output circuit, so that the processor performs the method according to any possible implementation of the first aspect.

Optionally, there are one or more processors, and there are one or more memories.

Optionally, the memory and the processor may be integrated together, or the memory and the processor may be separately disposed.

Optionally, the apparatus further includes a transmitter (transmitter machine) and a receiver (receiver machine). The transmitter and the receiver may be separately disposed, or may be integrated together, and are referred to as a transceiver (transceiver machine).

In a specific implementation process, the memory may be a non-transitory (non-transitory) memory, for example, a read-only memory (read-only memory, ROM). The memory and the processor may be integrated on a same chip, or may be separately disposed on different chips. A type of the memory and a manner of disposing the memory and the processor are not limited in this application.

The processor in the sixth aspect may be a chip, and the processor may be implemented by hardware or software. When implemented by the hardware, the processor may be a logic circuit, an integrated circuit, or the like; or when implemented by the software, the processor may be a general-purpose processor, and is implemented by reading software code stored in the memory. The memory may be integrated in the processor, or located outside the processor and exist separately.

According to a seventh aspect, a communication system is provided, and includes an apparatus configured to implement the method according to any one of the first aspect or the possible implementations of the first aspect, and an apparatus configured to implement the method according to any one of the fourth aspect or the possible implementations of the fourth aspect; or includes an apparatus configured to implement the method according to any one of the second aspect or the possible implementations of the second aspect, an apparatus configured to implement the method according to any one of the third aspect or the possible implementations of the third aspect, and an apparatus configured to implement the method according to any one of the fourth aspect or the possible implementations of the fourth aspect.

In a possible design, the communication system may further include another device that interacts with at least one of a first device, a second device, and a terminal device in the solutions provided in embodiments of this application.

According to an eighth aspect, a computer program product is provided. The computer program product includes a computer program (which may also be referred to as code or instructions). When the computer program is run, a computer is enabled to perform the method according to any possible implementation of any one of the foregoing aspects.

According to a ninth aspect, a computer-readable storage medium is provided. The computer-readable storage medium stores a computer program (which may also be referred to as code or instructions). When the computer program is run on a computer, the computer is enabled to perform the method according to any possible implementation of any one of the foregoing aspects.

According to a tenth aspect, a chip system is provided. The chip system includes a processor, configured to implement the method according to any one of the first aspect or the possible implementations of the first aspect, or configured to implement the method according to any possible implementation of any one of the foregoing aspects.

In a possible design, the chip system further includes a memory, and the memory is configured to store program instructions. The chip system may include a chip, or may include a chip and another discrete component.

### BRIEF DESCRIPTION OF DRAWINGS

FIG. 1 is a diagram of a network architecture according to an embodiment of this application;
FIG. 2 is a block diagram of a CFN network according to an embodiment of this application;
FIG. 3 is a diagram of a scenario in which a terminal moves in a CFN network according to an embodiment of this application;
FIG. 4 is a schematic flowchart of a communication method according to an embodiment of this application;
FIG. 5 is a schematic flowchart of a synchronization method according to an embodiment of this application;
FIG. 6 is a schematic flowchart of another synchronization method according to an embodiment of this application;
FIG. 7 is a schematic flowchart of still another synchronization method according to an embodiment of this application;
FIG. 8 is a schematic flowchart of another communication method according to an embodiment of this application;
FIG. 9A and FIG. 9B are a schematic flowchart of still another communication method according to an embodiment of this application;
FIG. 10A and FIG. 10B are a schematic flowchart of yet another communication method according to an embodiment of this application;
FIG. 11 is a block diagram of a communication apparatus according to an embodiment of this application; and
FIG. 12 is a block diagram of another communication apparatus according to an embodiment of this application.

### DESCRIPTION OF EMBODIMENTS

The following describes technical solutions of this application with reference to the accompanying drawings.

The technical solutions provided in this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5G mobile communication system, a new radio (new radio, NR) system or another evolved communication system, and a next generation mobile communication system of a 5G communication system or a future communication system.

A terminal device in embodiments of this application may also be referred to as a user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a device that provides voice and/or data connectivity for a user, for example, a handheld device or a vehicle-mounted device having a wireless connection function. Currently, some examples of the terminal include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a vehicle-mounted device, a wearable device, a terminal in a 5G network, a terminal in a future evolved public land mobile network (public land mobile network, PLMN), and the like. This is not limited in this application.

By way of example but not limitation, in this application, the terminal device may be a terminal device in an internet of things (internet of things, IoT) system. The internet of things is an important part of future development of information technologies. A main technical feature of the internet of things is connecting a thing to a network based on a communication technology, to implement an intelligent network of human-machine interconnection and thing-thing interconnection. For example, the terminal in embodiments of this application may be a wearable device. The wearable device may also be referred to as a wearable intelligent device, and is a general term of wearable devices, such as glasses, gloves, watches, clothing, and shoes, that are intelligently designed and developed for daily wear by using a wearable technology. The wearable device is a portable device that can be directly worn on a body or integrated into clothes or an accessory of a user. The wearable device is not only a hardware device, but also can implement a powerful function through software support, data exchange, and cloud interaction. In a broad sense, wearable intelligent devices include full-featured and large-sized devices that can implement all or some of functions without depending on smartphones, for example, smart watches or smart glasses, and include devices that are dedicated to only one type of application function and need to collaboratively work with other devices such as smartphones, for example, various smart bands or smart jewelry for monitoring physical signs.

For ease of understanding, related terms used in this application are first described.
1. SMF: The SMF manages creation, deletion, and the like of a PDU session, and maintains a PDU session context and user plane forwarding tunnel information.
2. Access and mobility management function (access and mobility management function, AMF): The access and mobility management function performs registration, connection, reachability, and mobility management, provides a channel for transmitting a session management message between the UE and the SMF, provides authentication and authorization functions during user access, and serves as an access point of the terminal and a control plane of a wireless core network.
3. Unified data management (unified data management, UDM): The unified data management is responsible for management of a user identifier, subscription data, and authentication data, and serving network element registration management of a user (for example, registration management of the AMF or the SMF that currently provides a service for the terminal, where for example, when the AMF accessed by the user is switched, the UDM further sends a deregistration message to the old AMF to request the old AMF to delete user-related information).
4. Policy control function (policy control function, PCF): The policy control function is configured to: generate and manage user, session, and quality of service (quality of service, QoS) flow processing policies, support a unified policy framework to manage network behavior, provide a policy rule for a network entity to execute, and access subscription information of a unified data repository (unified data repository, UDR).
5. UDR: The UDR stores and retrieves subscription data, policy data, common architecture data, and the like for the UDM, the PCF, and a network exposure function (network exposure function, NEF) to obtain related data.
6. User plane function (user plane function, UPF): The user plane function is responsible for a user plane function, packet routing and forwarding, policy implementation, traffic reporting, and QoS processing.

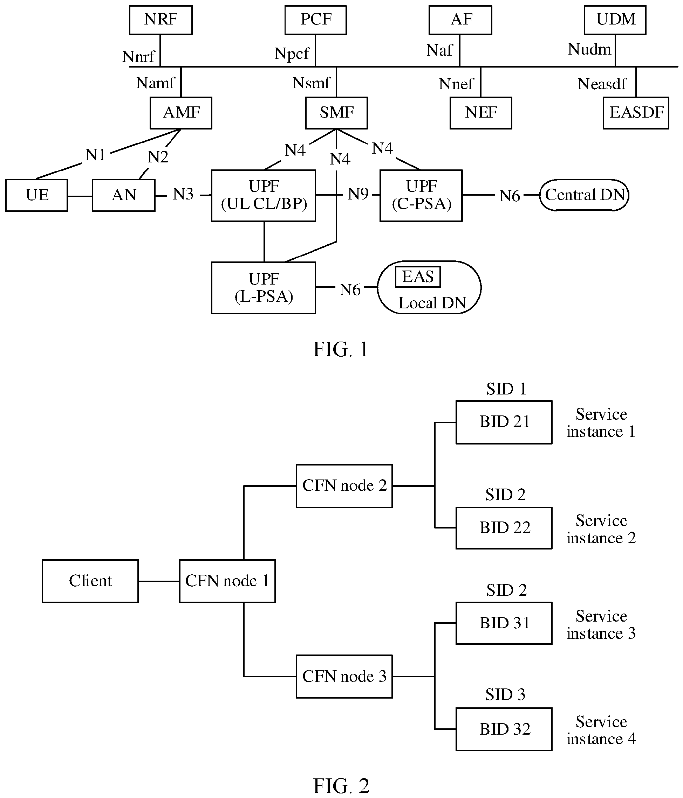

FIG. 1 is a diagram of a network architecture according to an embodiment of this application. As shown in FIG. 1, a core network of a 5G network architecture may be divided into a control plane (control plane, CP) and a user plane (user plane, UP). The UP includes UPFs, and the CP includes an AMF, an SMF, a PCF, a UDM, a UDR, an NEF, and an application function (application function, AF). The AMF exchanges information with a radio access network (radio access network, RAN) and a UE through N2 and N1 interfaces, to complete functions such as registration, session establishment, and mobility management. The SMF controls the UPFs through N4 interfaces. CP network elements, such as the SMF, the UDM, and the PCF, interact with each other through service-based interfaces.

For example, in a 5G mobile edge computing (mobile edge computing, MEC) scenario, a data network (data network, DN) is divided into a central (central) DN and a local (Local) DN, and exchanges data with the UPF through an N6 interface. The CP further includes an edge application server discovery function (edge application server discovery function, EASDF) network element, configured to discover an edge application server (edge application server, EAS).

As shown in FIG. 1, N1 is an interface between the UE and the control plane of the core network, and is used to transmit network attached storage (network attached storage, NAS) signaling. N2 is a communication interface between the AN and the control plane of the core network. N3 is a communication interface between the AN and the user plane network element UPF in the core network, and is used to transmit user data. N4 is a communication interface between the SMF and the UPF, and is used to perform policy configuration and the like on the UPF. Nnrf, Namf, Npcf, Nsmf, Naf, Nnef, Nudm, and Neasdf in FIG. 1 are service-based interfaces. It should be understood that, for functions of some network elements, refer to the descriptions in the foregoing network element descriptions. For details, refer to a known technology. Details are not described herein.

CFN enables interconnection and collaboration of large-scale edge computing nodes and adapts to service dynamics, to implement optimal service access and load balancing. This solves problems of low collaboration efficiency and low resource utilization in a distributed edge computing scenario.

FIG. 2 is a block diagram of a CFN network according to an embodiment of this application. As shown in FIG. 2, the network includes three types of entities: a client, a CFN node, and a service instance. The client (client) is configured to request computing power, a service, and the like. The CFN node is a forwarding node in the CFN network. The service instance may also be referred to as a computing power node or a computing node, and is configured to provide the computing power and the service.

It should be understood that the service instance in this embodiment of this application may also be referred to as an application instance or a server. There may be one or more entities of each type. This is not limited in this application.

As shown in FIG. 2, the CFN network includes a plurality of service instances, and service instances of a same type may use a same service identifier (service identity document, SID) (which may be, for example, a same dyncast address). For example, a service instance 2 and a service instance 3 use a same SID 2. However, each service instance has a unique binding identifier (binding ID, BID) (which may be, for example, an IP address). For example, a service instance 1 to a service instance 4 have respective BIDs.

For example, a process of publishing computing power information of the CFN network shown in FIG. 2 may include the following steps.

Step 1: The service instance 1 to the service instance 4 publish service information to CFN nodes (including a node 1 to a node 3).

The service information may include the SID, the BID, and a service state on the service instance, for example, available resource information, a total resource quantity, an available resource proportion, or an available resource level.

Step 2: Publish service information between the CFN nodes.

For example, the publication of the service information may be completed according to an extended border gateway protocol (border gateway protocol, BGP).

It should be understood that the published service information may be information such as SID information and a service state that are obtained by combining the service information obtained by the CFN nodes in step 1.

For example, in FIG. 2, the CFN node 2 collects, in step 1, SID information and service states that are provided by all service instances connected to the node, and then the CFN node 2 sends the collected information to the CFN node 1 according to the extended BGP. In addition, when the service information changes, the CFN node 2 may update the service information to the CFN node 1.

As shown in FIG. 2, a process of computing power selection in the CFN network may include the following process: When receiving a service request of the client, the CFN node 1 serves as a CFN access node (ingress node) (where correspondingly, other CFN nodes in the CFN network are egress nodes (CFN egress nodes)). The node selects a CFN egress node (for example, selects the node 2 as the CFN egress node) based on the service information and a network state between the nodes that are obtained in step 1 and step 2, and a SID requested by the client. Then, the CFN ingress node forwards the service request of the client to the selected CFN egress node. After receiving the service request, the CFN egress node selects, based on the requested SID, a service instance BID corresponding to the SID and forwards the service request.

It should be understood that, in a process of forwarding the service request, the CFN ingress node and the CFN egress node need to record request information of the client and a corresponding forwarding rule, so that when a request of the client for the same SID is subsequently received again, a same service instance and forwarding path may be used to provide a same service and same network quality.

In some embodiments, as shown in FIG. 2, the client connected to the CFN node 1 sends a service request for the SID 2, the CFN node 1 serves as a CFN ingress node (where correspondingly, other nodes such as the CFN node 2 and the CFN node 3 are CFN egress nodes), and determines, based on service information received by the CFN node 2 and the CFN node 3, that both the CFN node 2 and the CFN node 3 can provide a service of the SID 2. Then, with reference to network state information, service states provided by the CFN node 2 and the CFN node 3, and a local policy of the CFN node 1, the CFN node 2 is selected as a CFN egress node of the current service request, and the service request is further forwarded to the CFN node 2. After receiving the request, the CFN node 2 selects, based on a locally maintained service and states of the service instances, a BID 22 to provide a service for the current request, and further sends the request to the BID 22.

It should be understood that, in computing power routing in the CFN network shown in FIG. 2 (to be specific, a process of sending the request between the CFN ingress node and the CFN egress node), a route may be specified. For example, a packet is sent based on a specified path in a manner such as internet protocol version 6 (internet protocol version 6, IPv6)-based segment routing (segment routing, SR) (SRv6 for short).

It should be further understood that the CFN network shown in FIG. 2 is implemented based on a capability of a user plane forwarding node, which is referred to as a distributed architecture. The CFN network is further implemented based on a centralized controller (which may be referred to as a centralized architecture). For example, there is a centralized control plane network element, and the control plane network element interacts with a user plane network element, so that the control plane network element obtains computing power/service information and a service state that are associated with the user plane network element, further selects a service entity for a user, generates a related forwarding policy, and configures the forwarding policy to the user plane network element.

Currently, in the CFN network, when a service flow reaches the CFN ingress node, the CFN ingress node selects a proper CFN egress node based on a network state and a computing power resource, to ensure affinity of an application access data flow.

The affinity of the data flow is an important feature supported by CFN-dyncast (dyncast). After the egress node and an application server are determined, a flow binding relationship table is needed to store a flow binding relationship, including a flow identifier, a selected CFN node or service entity, an affinity timeout duration, and the like. Table 1 shows a flow binding relationship between the CFN nodes, and a specific binding relationship is shown in Table 1.

**Table 1**

| Flow identifier | | | | | CFN egress node | Affinity timeout duration |
|---|---|---|---|---|---|---|
| Source IP | Destination IP | Source port | Destination port | Protocol | | |
| X | SID 2 | - | 8888 | TCP | CFN node 2 | T1 |
| Y | SID 2 | - | 8888 | TCP | CFN node 3 | T2 |

In some embodiments, the affinity of the data flow is determined based on a correspondence between a quintuple (the flow identifier) and the CFN node/service entity (server), to ensure that all data is sent to a same server for processing.

However, when mobility switching occurs on a terminal and an IP changes, the quintuple of the flow changes (the source IP changes), and the affinity of the data flow cannot be maintained based on the quintuple. In other words, the CFN ingress node reallocates, to the CFN egress node, a received application access data flow sent by a same terminal device as a new access flow, and cannot ensure that the application access data flow is routed to an original CFN egress node. Even if the CFN ingress node routes the data flow to the original CFN egress node, the CFN egress node also reallocates the data flow as a new access data flow to a service instance because of the change of the quintuple.

In conclusion, in a mobile network, as the terminal device moves geographically, both the IP of the terminal device and the ingress node may change. Therefore, if the correspondence between the quintuple of the flow and the CFN node/server continues to be used in the CFN, request messages of a same application initiated by a same terminal device cannot be routed to a same server for processing, and the affinity of the application access data flow cannot be maintained.

In view of this, this application provides a communication method and a related apparatus. A globally unique identifier (a second identifier) is generated by accessing a same application initiated by a same terminal device, and a relationship between the second identifier and a CFN node (a first device or a second device) or between the second identifier and a server is bound. In this way, when the terminal device moves, request messages of the same application may still be routed, based on a synchronized binding relationship, to a same server for processing, to maintain affinity of an application access data flow in a scenario in which the terminal device moves in a CFN mobile network.

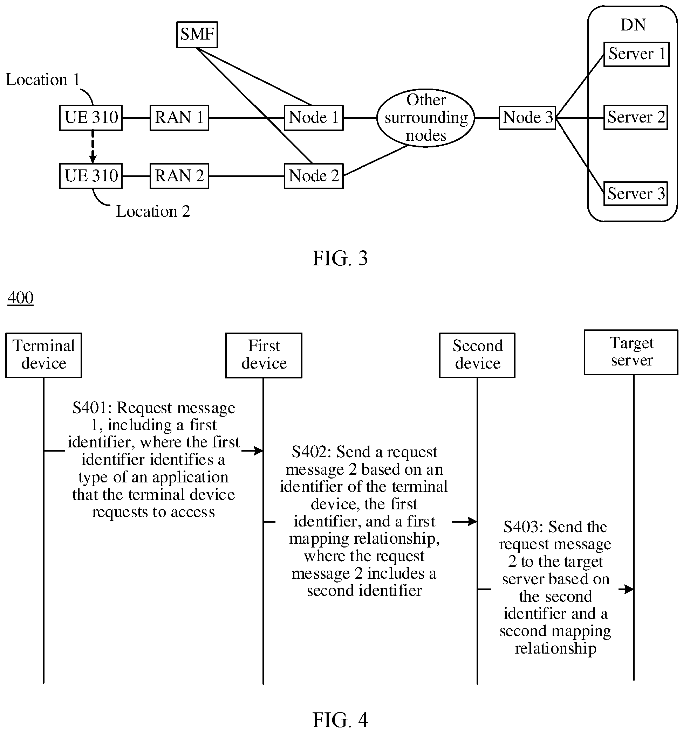

FIG. 3 is a diagram of a scenario in which a terminal moves in a CFN network according to an embodiment of this application. As shown in FIG. 3, one UE 310, a plurality of nodes, a server 1, a server 2, and a server 3 are included. The UE 310 at a location 1 accesses a node 1 from a RAN 1, is forwarded by other surrounding nodes, and finally reaches the server 1 through a node 3. When the UE 310 moves (from the location 1 to a location 2), and moves from the RAN 1 to a RAN 2, an ingress node changes from the node 1 to a node 2. In this case, to maintain affinity of an application access data flow, application access data flows sent by the UE 310 need to be forwarded to the same server 1 through a same egress node (the node 3) for processing.

Before the communication method and the related apparatus provided in embodiments of this application are described, the following several points are first described.

First, in the following shown embodiments, the terms and abbreviations, for example, SMF and UPF, are all examples provided for ease of description, and should not be construed as any limitation on this application. This application does not exclude a possibility of another term that can implement a same or similar function and that has been defined or will be defined in the future.

Second, "first", "second", and various numbers in the following embodiments are merely used for differentiation for ease of description, but are not intended to limit the scope of embodiments of this application. For example, different request messages and different mapping relationships are distinguished. It needs to be noted that ordinal numbers such as "first" and "second" used in embodiments of this application are used to distinguish between a plurality of objects, but are not intended to limit a sequence, a time sequence, a priority, or importance of the plurality of objects.

Third, "at least one" means one or more, and "a plurality of" means two or more. "And/or" describes an association relationship between associated objects, and represents that three relationships may exist. For example, A and/or B may represent the following three cases: Only A exists, both A and B exist, and only B exists, where A and B may be singular or plural. The character "/" generally indicates an "or" relationship between the associated objects. "At least one of the following items (pieces)" or a similar expression thereof indicates any combination of these items, including any combination of singular items (pieces) or plural items (pieces). For example, at least one (piece) of a, b, and c may represent a, b, c, a and b, a and c, b and c, or a, b, and c, where a, b, and c may be singular, or may be plural.

With reference to FIG. 4, the following describes in detail how request messages for accessing a same application that are sent by a same terminal device can be routed to a same egress node in the scenario in which the terminal moves shown in FIG. 3, to forward the request messages to a same server for data processing.

FIG. 4 is a schematic flowchart of a communication method 400 according to an embodiment of this application. The method 400 may be applied to the system architectures or scenarios shown in FIG. 1 to FIG. 3. However, this embodiment of this application is not limited thereto. As shown in FIG. 4, the method 400 may include S401 to S403. The following describes each step in the method 400 in detail.

S401: A terminal device sends a request message 1 to a first device, where the request message 1 includes a first identifier, and the first identifier identifies a type of an application that the terminal device requests to access. Correspondingly, the first device receives the request message 1.

It should be understood that the first identifier may be a SID, and different applications may use different SID identifiers.

It should be further understood that the first request message is a request message sent by the terminal device when the terminal device accesses the application identified by using the first identifier. It should be noted that, in this embodiment of this application, applications that an X^{th} request message is used to request to access are applications identified by using the same first identifier.

S402: The first device sends a request message 2 to a second device based on an identifier of the terminal device, the first identifier, and a first mapping relationship, where the request message 2 includes a second identifier. Correspondingly, the second device receives the request message 2.

The second device and the second identifier are determined based on the first mapping relationship, and the first mapping relationship indicates a correspondence between the identifier of the terminal device, the first identifier, the second identifier, and the second device. The second identifier identifies that access of the terminal device to a target server is continuous access, and the target server is a server configured to process the request message. In other words, the target server is a server configured to process applications identified by a same terminal device by using the same first identifier.

It should be understood that, when receiving the request message 1, the first device may determine the terminal device from which the request message comes, to obtain the identifier of the terminal device.

It should be further understood that the request message 2 may further include the first identifier.

In this embodiment of this application, the second identifier is corresponding to the identifier of the terminal device and the first identifier. When receiving, again, a request of the terminal device for accessing the application, the first device may determine the second identifier based on the first identifier, to further determine the second device.

S403: The second device sends the request message 2 to the target server based on the second identifier and a second mapping relationship. Correspondingly, the target server receives the request message 2.

In this embodiment of this application, request messages that carry the same first identifier are routed, based on the identifier of the terminal device, the first identifier carried in the request messages, and the first mapping relationship predetermined by the first device, to the same second device for processing, and the second identifier is carried when the request messages are forwarded. In this way, the second device routes, based on the predetermined second mapping relationship and the second identifier, the request messages to a same server for processing, to ensure affinity of data flows in the request messages.

In an optional embodiment, before the request message 1 from the terminal device is received, the method 400 further includes: The terminal device sends a request message 3 to the first device, where the request message 3 includes the first identifier. Correspondingly, the first device receives the request message 3, and determines the second identifier based on the first identifier. The first device determines the second device based on the first identifier, computing power information, and network information. The first device sends a request message 4 to the second device, where the request message 4 includes the second identifier. Correspondingly, the second device receives the request message 4.

For example, the computing power information and the network information may be available resource information, a total resource quantity, an available resource proportion, an available resource level, or the like.

In an optional embodiment, determining the second identifier based on the first identifier includes: determining the second identifier based on the first identifier and first preconfiguration information, where the first preconfiguration information indicates a correspondence between a continuously accessed application and a type of the application; or determining the second identifier based on the first identifier, the identifier of the terminal device, and second preconfiguration information, where the second preconfiguration information indicates a correspondence between a continuously accessed application, a type of the application, and the terminal device.

For example, the preconfiguration information may be obtained in the following two manners.

Manner 1: Step 1: Configure the continuously accessed application and the type of the application in a PCF.

Step 2: In a PDU session creation process, an SMF obtains configuration information about continuous access in step 1 from the PCF.

Step 3: The SMF sends the configuration information obtained in step 2 to the first device.

It should be understood that, when the obtained information is sent in step 3, the identifier of the terminal device may be associated, to further determine that which terminal devices continuously access the application identified by using the first identifier.

Manner 2: When deploying the first device (for example, a UPF), an operator may write the correspondence between the continuously accessed application and the type of the application into a database of the first device, or write the correspondence between the continuously accessed application, the type of the application, and the identifier of the terminal device into the database of the first device.

It should be understood that, for the foregoing manner of determining the second device, refer to related descriptions of determining the egress node in FIG. 2. Details are not described herein again.

It should be further understood that, an application that needs to be continuously accessed and that is identified by using the first identifier is preconfigured on the first device. When receiving a request message of the application, the first device determines, based on the first identifier carried in the request message and preconfigured information, whether the terminal device needs to continuously access a server (the target server) configured to process the request message. When determining that the terminal device needs to continuously access the target server, the first device may randomly generate a second identifier (for example, generate a universally unique identifier (universally unique identifier, UUID)), associate the generated second identifier, the identifier of the terminal device, the first identifier, and the second device, to obtain the first mapping relationship, and record the first mapping relationship. It should be noted that when the first device forwards the request message to the second device, the second device cannot obtain the identifier of the terminal device based on the request message. Therefore, the second identifier is carried in the second request message.

In this embodiment of this application, after determining the first mapping relationship, the first device may determine the second device by identifying the identifier of the terminal device and the first identifier that are carried in the request message. This effectively avoids a case in which request messages of a same application are routed to different second devices by the first device.

In an optional embodiment, the method 400 further includes: The second device determines the target server based on the first identifier, computing power information, and network information. The second device sends a request message 4 to the target server. Correspondingly, the target server receives the request message 4.

It should be understood that, for the foregoing manner of determining the target server, refer to related descriptions of determining the service entity in FIG. 2. Details are not described herein again.

Optionally, the request message forwarded by the second device to the target server may include the first identifier, include the second identifier, or include the first identifier and the second identifier. This is not limited in this application.

In this embodiment of this application, after determining the target server, the second device stores a correspondence between the second identifier and the target server on the second device, to form the second mapping relationship, so that when request messages that carry the same second identifier are received again, a target device can be determined based on the second mapping relationship. This ensures that the request messages of the same application can be routed to the same server for processing.

In an optional embodiment, the identifier of the terminal device includes: a MAC address of the terminal device, an IMEI of the terminal device, an SUPI of the terminal device, or an identifier of a PDU session used by the terminal device to access the target server.

In an optional embodiment, the first mapping relationship is from the SMF, and the SMF is an SMF serving the terminal device; or the first mapping relationship is from a third device, and the third device is a device to which the terminal device is connected when the terminal device accesses the target server.

It should be understood that the first device that receives the request message 1 and a first device that receives the request message 2 may be a same device or may be different devices. When the first devices are different devices, a first mapping relationship on the first device that receives the request message 2 may be from the first device (which is referred to as the third device herein) that receives the request message 1.

In this embodiment of this application, when the terminal device moves and accesses different first devices, a first mapping relationship recorded on a first device accessed by the terminal device last time may be synchronized to a first device accessed this time, so that request messages of a same application on the same terminal device can be routed to a same second device for processing.

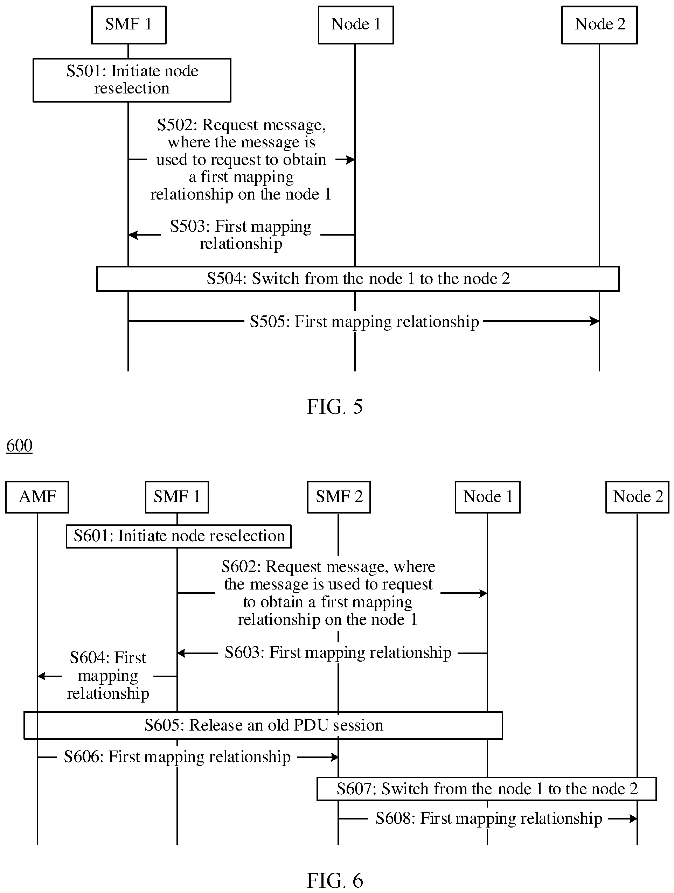

The following describes in detail the foregoing process of synchronizing the first mapping relationship with reference to FIG. 5 to FIG. 7 by using an example in which the first device is a node 2 and the third device is a node 1.

FIG. 5 is a schematic flowchart of a synchronization method 500 according to an embodiment of this application. As shown in FIG. 5, the method 500 includes the following steps.

S501: An SMF 1 initiates node reselection.

S502: The SMF 1 sends a request message to a node 1, where the message is used to request to obtain a first mapping relationship on the node 1. Correspondingly, the node 1 receives the request message.

It should be understood that the request message carries a request parameter, and the request parameter may be an identifier of a terminal device or an identifier of a PDU session.

S503: The node 1 sends the first mapping relationship to the SMF 1. Correspondingly, the SMF 1 receives the first mapping relationship.

Optionally, that the SMF 1 obtains the first mapping relationship on the node 1 may alternatively be that the node 1 reports the first mapping relationship to the SMF 1 after generating the first mapping relationship, in other words, the node 1 sends the generated first mapping relationship to the SMF 1 after S605.

S504: Switch from the node 1 to a node 2.

For example, a switching procedure may be a manner of reselecting a node, creating a new PDU session, releasing an old PDU session, or the like. For details, refer to a conventional technology. Details are not described herein.

S505: The SMF 1 sends the first mapping relationship to the node 2. Correspondingly, the node 2 receives the first mapping relationship.

For example, the SMF 1 may deliver the first mapping relationship to the node 2 by using a session creation or modification request.

FIG. 6 is a schematic flowchart of another synchronization method 600 according to an embodiment of this application. As shown in FIG. 6, the method 600 includes the following steps.

S601: An SMF 1 initiates node reselection.

S602: The SMF 1 sends a request message to a node 1, where the message is used to request to obtain a first mapping relationship on the node 1. Correspondingly, the node 1 receives the first mapping relationship.

It should be understood that the request message carries a request parameter, and the parameter may be an identifier of a terminal device or an identifier of a PDU session.

S603: The node 1 sends the first mapping relationship to the SMF 1. Correspondingly, the SMF 1 receives the first mapping relationship.

Optionally, that the SMF 1 obtains the first mapping relationship on the node 1 may alternatively be that the node 1 reports the first mapping relationship to the SMF 1 after generating the first mapping relationship, in other words, the node 1 sends the generated first mapping relationship to the SMF 1 after S605.

S604: The SMF 1 sends the first mapping relationship to an AMF. Correspondingly, the AMF receives the first mapping relationship.

S605: Release an old PDU session.

For the foregoing PDU session release procedure, refer to a known technology. Details are not described herein.

S606: The AMF sends the first mapping relationship to an SMF 2. Correspondingly, the SMF 2 receives the first mapping relationship.

S607: Switch from the node 1 to a node 2.

For example, a switching procedure may be a manner of reselecting a UPF, creating a new PDU session, releasing the old PDU session, or the like.

S608: The SMF 2 sends the first mapping relationship to the node 2. Correspondingly, the node 2 receives the first mapping relationship.

For example, the SMF 2 may deliver the first mapping relationship to the node 2 by using a session creation or modification request.

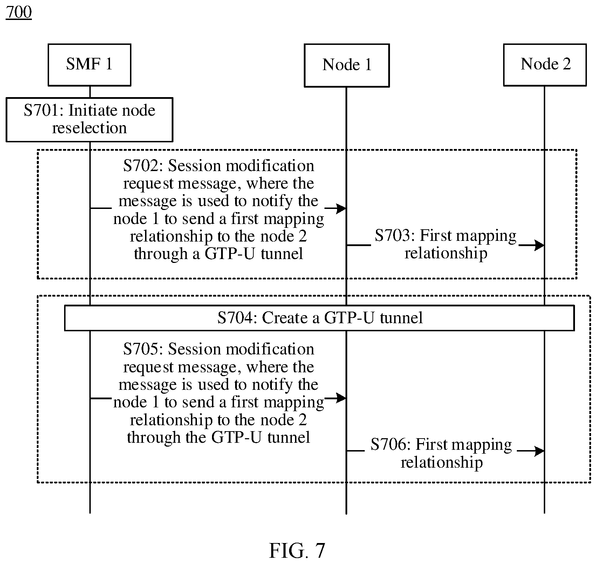

FIG. 7 is a schematic flowchart of still another synchronization method 700 according to an embodiment of this application. As shown in FIG. 7, the method 700 includes the following steps.

S701: An SMF 1 initiates node reselection.

In a possible implementation, a general packet radio service tunneling protocol user plane (general packet radio service tunneling protocol user plane, GTP-U) tunnel exists between a node 1 and a node 2.

S702: The SMF 1 sends a session modification request message to the node 1, where the message is used to notify the node 1 to send a first mapping relationship to the node 2 through the GTP-U tunnel. Correspondingly, the node 1 receives the session modification request message.

S703: The node 1 sends the first mapping relationship to the node 2 through the GTP-U tunnel. Correspondingly, the node 2 receives the first mapping relationship.

In another possible implementation, no GTP-U tunnel exists between a node 1 and a node 2.

S704: The SMF 1 creates a GTP-U tunnel.

For the foregoing process of creating the GTP-U tunnel, refer to a known technology. Details are not described herein.

S705: The SMF 1 sends a session modification request message to the node 1, where the message is used to notify the node 1 to send a first mapping relationship to the node 2 through the GTP-U tunnel. Correspondingly, the node 1 receives the session modification request message.

S706: When the GTP-U tunnel is established, the node 1 sends the first mapping relationship to the node 2 through the GTP-U tunnel. Correspondingly, the node 2 receives the first mapping relationship.

In an optional embodiment, an identifier of a terminal device includes: a MAC address of the terminal device, an IMEI of the terminal device, an SUPI of the terminal device, or a session identifier of a PDU session used by the terminal device to access a target server.

It should be understood that the identifier of the terminal device does not change with movement of the terminal device.

Optionally, a second identifier may include an access identifier and a continuity identifier. The access identifier may be the identifier of the terminal device, or a fixed unique identifier generated based on a UUID. The continuity identifier may be obtained based on configuration information on a first device.

It should be understood that, after the second identifier is generated, when receiving a request message, a second device identifies the second identifier, and may determine that the terminal device continuously accesses an application identified by using a first identifier, in other words, all request messages that carry the second identifier need to be routed to a same server for processing. For example, the second identifier may be carried in an IPv6 packet or a segment routing header (segment routing header, SRH) of the request message.

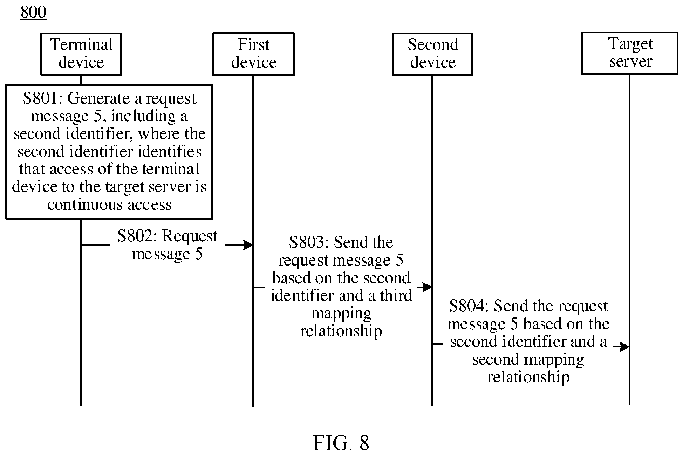

FIG. 8 is a schematic flowchart of another communication method 800 according to an embodiment of this application. The method 800 may be applied to the system architectures or scenarios shown in FIG. 1 to FIG. 3. However, this embodiment of this application is not limited thereto. As shown in FIG. 8, the method 800 may include S801 to S804. The following describes each step in the method 800 in detail.

S801: A terminal device generates a request message 5, where the request message 5 includes a second identifier, the second identifier is used to identify that access of the terminal device to a target server is continuous access, and the target server is a server that processes the request message.

It should be understood that the request message 5 may further include a first identifier, and the first identifier identifies a type of an application accessed by the terminal device.

S802: The terminal device sends the request message 5 to a first device. Correspondingly, the first device receives the request message 5.

S803: The first device sends the request message 5 to a second device based on the second identifier and a third mapping relationship. Correspondingly, the second device receives the request message 5.

The third mapping relationship includes a correspondence between the second identifier and the second device.

It should be understood that the third mapping relationship may include a correspondence between a plurality of second identifiers and at least one second device.

S804: The second device sends the request message 5 to the target server based on the second identifier and a second mapping relationship.

The second mapping relationship includes a correspondence between the second identifier and the target server.

It should be understood that the second mapping relationship may include a correspondence between the plurality of second identifiers and at least one target server.

In this embodiment of this application, the second identifier used to determine that the terminal device needs to continuously access the target server is carried in the request message, so that a device that identifies the identifier can route, based on the predetermined mapping relationship and the second identifier, request messages that carry the same second identifier to the same server for processing, to ensure affinity of data flows in the request messages.

In an optional embodiment, the method 800 further includes: The terminal device receives a first message, where the first message indicates that the application identified by using the first identifier is a continuously accessed application, and determines the second identifier based on the first message and an identifier of the terminal device. The terminal device sends a request message 6 to a first device, where the request message 6 includes the first identifier and the second identifier. Correspondingly, the first device receives the request message 6.

The first identifier identifies the type of the application that the terminal device requests to access.

In an optional embodiment, the method 800 further includes: The first device determines the second device based on the first identifier carried in the request message 6, computing power information, and network information. The first device sends the request message 6 to the second device. Correspondingly, the second device receives the request message 6.

It should be understood that, for the foregoing process of determining the second device, refer to related descriptions of determining the egress node in FIG. 2. Details are not described herein again.

In this embodiment of this application, after determining the second device, the first device stores the correspondence between the second identifier and the second device on the first device, to form a third mapping relationship, so that when request messages that carry the same second identifier are received again, the second device can be determined based on the third mapping relationship. This effectively avoids a case in which request messages of a same application are routed to different second devices.

In an optional embodiment, the method 800 further includes: The second device determines the target server based on the first identifier, the computing power information, and the network information. The second device sends the request message 6 to the target server. Correspondingly, the target server receives the request message 6.

It should be understood that, for the foregoing process of determining the target server, refer to related descriptions of the process of determining the service entity in FIG. 2. Details are not described herein again.

In this embodiment of this application, after determining the target server, the second device stores the correspondence between the second identifier and the target server on the second device, to form the second mapping relationship, so that when request messages that carry the same second identifier are received again, a target device can be determined based on the second mapping relationship. This ensures that request messages of a same application can be routed to the same server for processing, and ensures affinity of an application data flow.

In an optional embodiment, the third mapping relationship is from an SMF, and the SMF is an SMF serving the terminal device; or the third mapping relationship is from a third device, and the third device is a device to which the terminal device is connected when the terminal device accesses the target server last time.

It should be understood that the first device that receives the request message 5 from the terminal device and the first device that receives the request message 6 from the terminal device may be a same device or may be different devices. When the first devices are different devices, the third mapping relationship on the first device that receives the request message 6 may be from the first device (which is referred to as the third device herein) that receives the request message 5.

In this embodiment of this application, when the terminal device moves and accesses different first devices, a third mapping relationship recorded on a first device accessed by the terminal device last time may be synchronized to a first device accessed this time, so that request messages of a same application on the same terminal device can be routed to the same second device for processing.

It should be further understood that, for a process of synchronizing the third mapping relationship, refer to the foregoing process of synchronizing the first mapping relationship shown in FIG. 5 to FIG. 7. Details are not described herein again.

Optionally, the second identifier may include an access identifier and a continuity identifier. The access identifier may be the identifier of the terminal device, or a fixed unique identifier generated based on a UUID. The continuity identifier may be obtained based on configuration information on the first device.

It should be understood that, after the second identifier is generated on a terminal device side, the identifier may be carried in the generated request message. When receiving the request message, the first device or the second device identifies the second identifier, and may determine that the terminal device continuously accesses the application identified by using the first identifier, in other words, all request messages that carry the second identifier need to be routed to the same server for processing. For example, the second identifier may be carried in an IPv6 packet or an SRH of the request message.

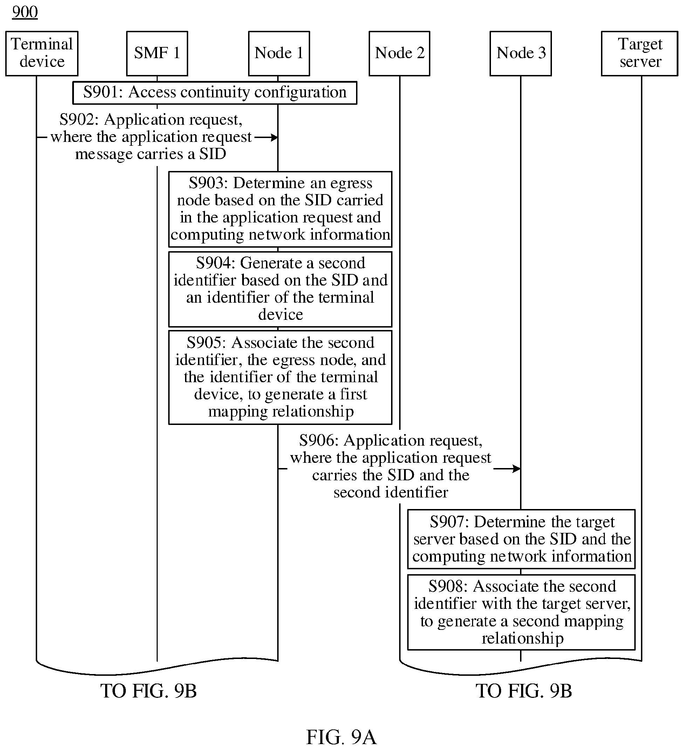

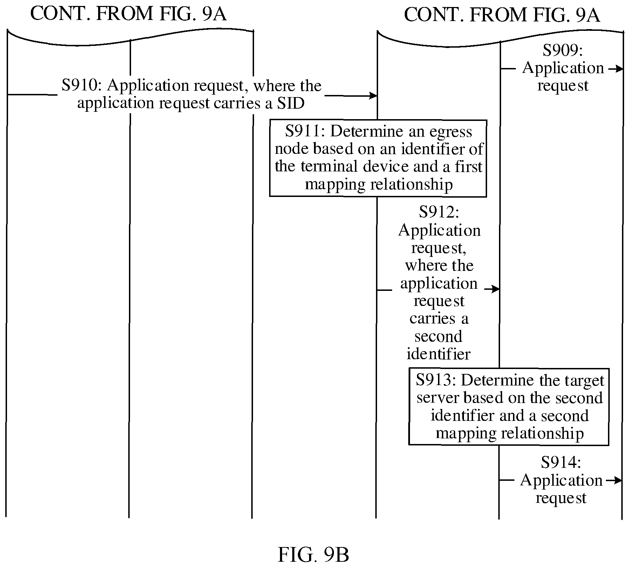

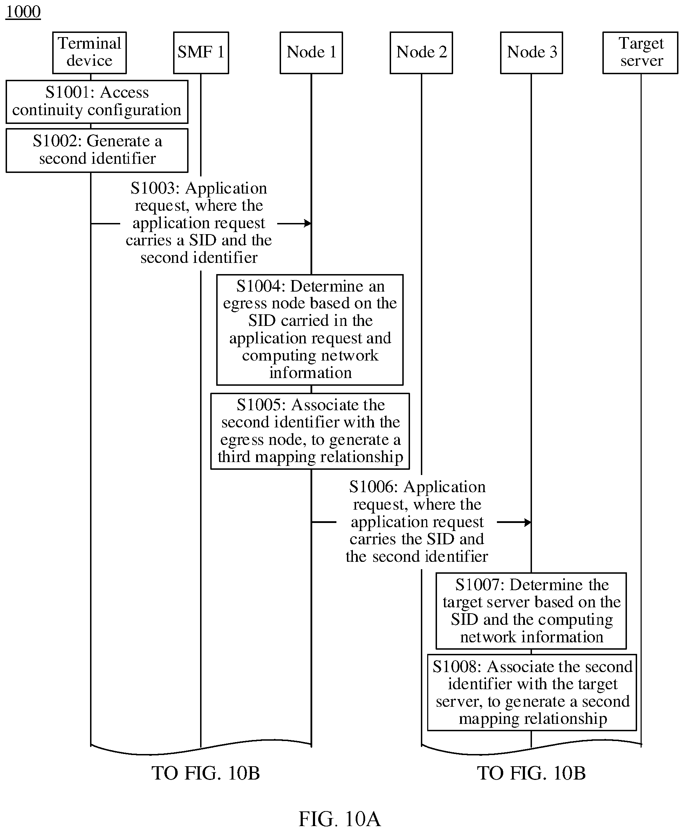

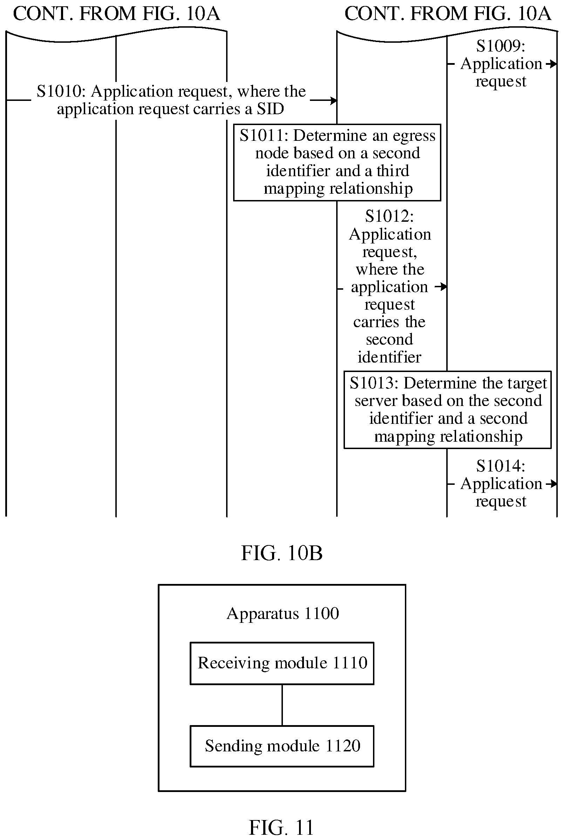

The following describes in detail a communication method provided in embodiments of this application with reference to FIG. 9A and FIG. 9B and FIG. 10A and FIG. 10B by using an example in which the first device is a node 1 (a node accessed before the terminal device moves) or a node 2 (a node accessed after the terminal device moves), and the second device is a node 3. It should be noted that, both a method 900 and a method 1000 shown in FIG. 9A and FIG. 9B and FIG. 10A and FIG. 10B are communication methods in a scenario in which a terminal device moves (an access node changes) and an IP of the terminal device changes.

FIG. 9A and FIG. 9B are a schematic flowchart of still another communication method 900 according to an embodiment of this application. The method 900 may be applied to the system architectures or scenarios shown in FIG. 1 to FIG. 3. However, this embodiment of this application is not limited thereto. As shown in FIG. 9A and FIG. 9B, the method 900 may include S901 to S914. The following describes each step in the method 900 in detail.

S901: Access continuity configuration.

For example, S901 may be implemented in the following two manners.

Manner 1 may include the following steps.
1: An application that needs to be continuously accessed may be configured in a PCF based on a SID or a slice identifier, where each slice includes an application and a requirement for continuous access of the application.
2: In a PDU session creation process, an SMF 1 reads policy information from the PCF, to obtain a continuous access policy related to the SID or the slice identifier.
3: The SMF sends, to a node 1 by using a session creation or session modification request, a message of the SID for continuous access, and associates a PDU session identifier or an identifier of a terminal device.

Manner 2: When deploying a node 1, an operator may perform continuous access configuration on an application based on a SID or a slice identifier, and configure the configuration on the node 1.

For example, on the node 1, an application that needs to be continuously accessed is written into a database of the node 1 based on the SID or the slice identifier.

S902: A terminal device sends an application request (a request message 3), where the application request carries the SID (a first identifier). Correspondingly, the node 1 receives the application request.

S903: The node 1 determines an egress node (a node 3) based on the SID carried in the application request and computing network information.

The computing network information is computing power information and network information.

It should be understood that for the process of determining the egress node, refer to related descriptions in the foregoing method 400. Details are not described herein again.

S904: The node 1 generates a second identifier based on the SID, an identifier of the terminal device, and the access continuity configuration (first preconfiguration information or second preconfiguration information).

Optionally, the second identifier may include an access identifier and a continuity identifier. For example, Table 2 shows the second identifier.

**Table 2**

| Continuity identifier | Access identifier |
|---|---|
| 1 | 80:69:33:60:a8:67 |

The continuity identifier shown in Table 2 is 1, indicating that a terminal device corresponding to the access identifier needs to continuously access a same server.

S905: The node 1 associates the second identifier, the egress node, the identifier of the terminal device, and the SID, to generate a first mapping relationship. For example, Table 3 shows the first mapping relationship.

**Table 3**

| Identifier of the terminal device | SID | Second identifier | | Egress node |
|---|---|---|---|---|
| | | Continuity identifier | Access identifier | |
| a | SID 1 | 1 | 80:69:33:60:a8:67 | Node 1 |
| b | SID 2 | 1 | 80:69:33:60:a8:68 | Node 2 |

It should be understood that the first mapping relationship shown in Table 3 may further include information such as timeout duration.

S906: The node 1 forwards an application request (a request message 4) to the node 3, where the forwarded application request carries the SID and the second identifier. Correspondingly, the node 3 receives the application request.

Optionally, the second identifier may be extended to an IPv6 packet or an SRH. In other words, the generated second identifier is packaged in a packet that carries the application request, and forwarded to the egress node (the node 3).

S907: The node 3 determines a target server based on the SID and the computing network information.

S908: The node 3 associates the second identifier with the target server, to generate a second mapping relationship. For example, Table 4 shows the second mapping relationship.

**Table 4**

| Second identifier | | Target server |
|---|---|---|
| Continuity identifier | Access identifier | |
| 1 | 80:69:33:60:a8:67 | BID 1 |
| 1 | 80:69:33:60:a8:68 | BID 2 |

It should be understood that the second mapping relationship shown in Table 4 may further include information such as the SID and the timeout duration.

S909: The node 3 forwards the application request (the request message 4) to the target server. Correspondingly, the target server receives the application request.

It should be understood that the application request forwarded by the node 3 to the target server may carry the second identifier and/or the SID.

It should be noted that S901 to S909 are a case in which the terminal device sends the application request for the first time. In other words, when receiving the application request for the first time, the node 1 needs to generate the second identifier and the first mapping relationship. When receiving the application request for the first time, the node 3 needs to generate the second mapping relationship. When receiving a same application request from a same terminal device not for the first time, the node 1 may forward the application request to the egress node (the node 3) based on a SID carried in the application request and a first mapping relationship. When receiving the application request from the node 1 not for the first time, the egress node (the node 3) may forward the application request to the target server based on a second identifier carried in the application request and a second mapping relationship.

S901 to S909 are a process of forwarding the application request when the terminal device does not move. The following S910 to S914 are a process of forwarding an application request when a terminal device moves.

It should be understood that the terminal device moves, an ingress node changes from a node 1 to a node 2, and an IP changes. In this case, a first mapping relationship on the node 1 needs to be synchronized to the node 2. For a specific synchronization process, refer to related descriptions of the method 500, the method 900, and the method 700. Details are not described herein again.

After synchronizing the first mapping relationship on the node 1 to the node 2, the terminal device continues to send the same application request. A specific forwarding process is shown in S910 to S914.

S910: The terminal device sends an application request (a request message 1) to the node 2, where the application request carries a SID. Correspondingly, the node 2 receives the application request.

S911: The node 2 determines an egress node (a node 3) based on an identifier of the terminal device and the first mapping relationship.

S912: The node 2 forwards an application request (a request message 2) to the node 3, where the application request carries a second identifier. Correspondingly, the node 3 receives the application request.

S913: The node 3 determines a target server based on the second identifier and a second mapping relationship.

It should be understood that the second mapping relationship is recorded in the node 3.

S914: The node 3 forwards the application request (the request message 2) to the target server. Correspondingly, the target server receives the application request.

In this embodiment of this application, a globally unique identifier (the second identifier) is generated by accessing a same application initiated by a same terminal device, and a relationship between the second identifier and a CFN node (a first device or a second device) or between the second identifier and a server is bound. In this way, when the terminal device moves, request messages of the same application may still be routed, based on a synchronized binding relationship, to the same server for processing, to maintain affinity of an application access data flow in a scenario in which the terminal device moves in a CFN mobile network.

FIG. 10A and FIG. 10B are a schematic flowchart of yet another communication method 1000 according to an embodiment of this application. The method 1000 may be applied to the system architectures or scenarios shown in FIG. 1 to FIG. 3. However, this embodiment of this application is not limited thereto. As shown in FIG. 10A and FIG. 10B, the method 1000 may include S1001 to S1014. The following describes each step in the method 1000 in detail.

S1001: A terminal device performs access continuity configuration.

The foregoing access continuity configuration may include the following steps.
1: An application that needs to be continuously accessed may be configured in a PCF based on a SID or a slice identifier, where each slice includes an application and a requirement for continuous access of the application.
2: In a PDU session creation process, an SMF 1 reads policy information from the PCF, to obtain a continuous access policy related to the SID or the slice identifier.
3: The SMF 1 sends the obtained continuous access policy to the terminal device via an AMF.

S1002: The terminal device generates a second identifier based on obtained policy information (a first message). The second identifier includes a continuity identifier and an access identifier.

S1003: The terminal device sends an application request (a request message 6), where the application request carries the SID (a first identifier) and the second identifier. Correspondingly, a node 1 receives the application request.

S1004: The node 1 determines an egress node (a node 3) based on the SID carried in the application request and computing network information.

It should be understood that for the process of determining the egress node, refer to related descriptions in the foregoing method 400. Details are not described herein again.

S1005: The node 1 associates the second identifier with the egress node (the node 3), to generate a third mapping relationship.

It should be understood that the third mapping relationship includes at least a correspondence between the second identifier and the egress node.

S1006: The node 1 forwards the application request to the node 3, where the forwarded application request carries the SID and the second identifier. Correspondingly, the node 3 receives the application request.

Optionally, the second identifier may be extended to an IPv6 packet or an SRH.

S1007: The node 3 determines a target server based on the SID and computing network information.

S1008: The node 3 associates the second identifier with the target server, to generate a second mapping relationship.

For the second mapping relationship, refer to the foregoing related descriptions about Table 4. Details are not described herein again.

S1009: The node 3 sends the application request (the request message 6) to the target server. Correspondingly, the target server receives the application request.

It should be understood that the application request forwarded by the node 3 to the target server may carry the second identifier.

It should be noted that S 1001 to S1009 are a case in which the terminal device sends the application request for the first time. In other words, when receiving the application request for the first time, the node 1 needs to generate the third mapping relationship. When receiving the application request for the first time, the egress node needs to generate the second mapping relationship. When receiving a same application request from a same terminal device not for the first time, a node 2 may forward the application request to the egress node based on the second identifier carried in the application request and the third mapping relationship. When receiving the request message from the node 1 not for the first time, the egress node may forward the application request to the target server based on the second identifier carried in the application request and the second mapping relationship.

S1001 to S1009 are a process of forwarding the application request when the terminal device does not move. The following S910 to S914 are a process of forwarding an application request when a terminal device moves.

It should be understood that the terminal moves, an ingress node changes from a node 1 to a node 2, and an IP changes. In this case, a third mapping relationship on the node 1 needs to be synchronized to the node 2. For a specific synchronization process, refer to related descriptions of the method 700, the method 800, or the method 900. Details are not described herein again.

After synchronizing the third mapping relationship on the node 1 to the node 2, the terminal device continues to send a request for accessing a same application. A specific forwarding process is shown in S1010 to S1014.

S1010: The terminal device sends an application request (a request message 5) to the node 2, where the application request carries a second identifier. Correspondingly, the node 2 receives the application request.

It should be understood that the application request may further carry a SID.

S1011: The node 2 determines an egress node (a node 3) based on the second identifier and the third mapping relationship.

S1012: The node 2 forwards the application request (the request message 5) to the node 3, where the application request carries the second identifier. Correspondingly, the node 3 receives the application request.

S1013: The node 3 determines a target server based on the second identifier and a second mapping relationship.

S1014: The node 3 forwards the application request (the request message 5) to the target server. Correspondingly, the target server receives the application request.

According to the method for synchronizing the third mapping relationship provided in this embodiment of this application, the mapping relationship generated by the node 1 may be synchronized to the node 2. When a location of the terminal device changes, and the IP of the terminal device and the ingress node change, the same application request message on the terminal device may be sent, based on the synchronized mapping relationship, to the same target server for processing, to ensure affinity of a data flow.

It should be noted that, in a scenario in which the terminal device moves, but the IP of the terminal device does not change, a correspondence between a quintuple and an access node/the target server may still be synchronized, to ensure that data is routed to the same server for processing.

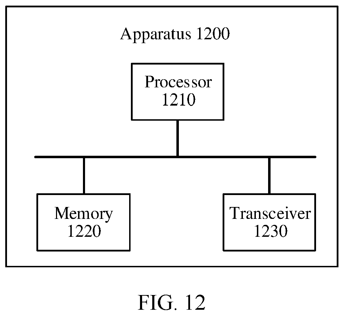

The foregoing describes in detail the communication methods provided in embodiments of this application with reference to FIG. 4 to FIG. 10A and FIG. 10B. The following describes in detail apparatuses in embodiments of this application with reference to FIG. 11 and FIG. 12.

FIG. 11 is a block diagram of a communication apparatus 1100 according to an embodiment of this application. As shown in FIG. 11, the apparatus 1100 includes a receiving module 1110 and a sending module 1120. Optionally, the apparatus 1100 further includes a processing module.

In a possible implementation, the apparatus 1100 is a first device or a chip in the first device.

In a design, the receiving module 1110 is configured to receive a first request message from a terminal device, where the first request message includes a first identifier, and the first identifier identifies a type of an application that the terminal device requests to access. The sending module 1120 is configured to: send a second request message to a second device based on an identifier of the terminal device, the first identifier, and a first mapping relationship, where the second request message includes a second identifier, the second device and the second identifier are determined based on the first mapping relationship, the first mapping relationship indicates a correspondence between the identifier of the terminal device, the first identifier, the second identifier, and the second device, the second identifier identifies that access of the terminal device to a target server is continuous access, and the target server is a server that processes the request message.

Optionally, the receiving module 1110 is further configured to receive a third request message from the terminal device, where the third request message includes the first identifier. The processing module is configured to: determine the second identifier based on the first identifier; and determine the second device based on the first identifier, computing power information, and network information. The sending module 1120 is further configured to send a fourth request message to the second device, where the fourth request message includes the second identifier.

Optionally, the processing module is further configured to: determine the second identifier based on the first identifier and first preconfiguration information, where the first preconfiguration information indicates a correspondence between a continuously accessed application and a type of the application; or determine the second identifier based on the first identifier, the identifier of the terminal device, and second preconfiguration information, where the second preconfiguration information indicates a correspondence between a continuously accessed application, a type of the application, and the terminal device.

Optionally, the first mapping relationship is from an SMF, and the SMF is an SMF serving the terminal device; or the first mapping relationship is from a third device, and the third device is a device to which the terminal device is connected when the terminal device accesses the target server.

Optionally, the identifier of the terminal device includes a media access control MAC address of the terminal device, an international mobile equipment identity IMEI of the terminal device, a subscription permanent identifier SUPI of the terminal device, or an identifier of a protocol data unit PDU session used by the terminal device to access the target server.

In another design, the receiving module 1110 is configured to receive a first request message from a terminal device, where the first request message includes a second identifier, the second identifier identifies that access of the terminal device to a target server is continuous access, and the target server is a server that processes the request message. The sending module 1120 is configured to send the first request message to a second device based on the second identifier and a third mapping relationship, where the third mapping relationship indicates a correspondence between the second identifier and the second device.

Optionally, the receiving module 1110 is further configured to receive a second request message from the terminal device, where the second request message includes a first identifier and the second identifier, and the first identifier identifies a type of an application that the terminal device requests to access. The processing module is configured to determine the second device based on the first identifier, computing power information, and network information. The sending module 1120 is further configured to send the second request message to the second device.

Optionally, the third mapping relationship is from an SMF, and the SMF is an SMF serving the terminal device; or the third mapping relationship is from a third device, and the third device is a device to which the terminal device is connected when the terminal device accesses the target server last time.

In an optional example, a person skilled in the art may understand that the apparatus 1100 may be specifically the first device in the foregoing embodiment, and the apparatus 1100 may be configured to perform procedures and/or steps corresponding to the first device in the method shown in the embodiment. To avoid repetition, details are not described herein again.

In another possible implementation, the apparatus 1100 is a second device or a chip in the second device.

In a design, the receiving module 1110 is further configured to receive a second request message from a first device, where the second request message includes a second identifier, the second identifier identifies that access of a terminal device to a target server is continuous access, and the target server is a server that processes the request message. The sending module 1120 is configured to send the second request message to the target server based on the second identifier and a second mapping relationship, where the second mapping relationship indicates a correspondence between the second identifier and the target server.

Optionally, the receiving module 1110 is further configured to receive a fourth request message from the second device, where the fourth request message includes a first identifier and the second identifier, and the first identifier identifies a type of an application that the terminal device requests to access. The processing module is configured to determine the target server based on the first identifier, computing power information, and network information. The sending module 1120 is further configured to send the fourth request message to the target server.

In another design, the receiving module 1110 is further configured to receive a first request message from a first device, where the first request message includes a second identifier, the second identifier identifies that access of a terminal device to a target server is continuous access, and the target server is a server that processes the request message. The sending module 1120 is configured to send the first request message to the target server based on the second identifier and a second mapping relationship, where the second mapping relationship indicates a correspondence between the second identifier and the target server.

Optionally, the receiving module 1110 is further configured to receive a second request message from the first device, where the second request message includes the first identifier and the second identifier, and the first identifier identifies a type of an application that the terminal device requests to access. The processing module is configured to determine the target server based on the first identifier, computing power information, and network information. The sending module 1120 is further configured to send the second request message to the target server.

In an optional example, a person skilled in the art may understand that the apparatus 1100 may be specifically the second device in the foregoing embodiment, and the apparatus 1100 may be configured to perform procedures and/or steps corresponding to the second device in the method shown in the embodiment. To avoid repetition, details are not described herein again.

In still another possible implementation, the apparatus 1100 is a terminal device or a chip in the terminal device.

The processing module is configured to generate a first request message, where the first request message includes a second identifier, the second identifier identifies that access of the terminal device to a target server is continuous access, and the target server is a server that processes the request message. The sending module 1120 is configured to send the first request message to a first device.

Optionally, the receiving module 1110 is configured to receive a first message, where the first message indicates that an application identified based on a first identifier is a continuously accessed application. The processing module is further configured to generate the second identifier based on an identifier of the terminal device and the first message. The sending module 1120 is further configured to send a second request message to the first device, where the second request message includes the first identifier and the second identifier, and the first identifier identifies a type of an application that the terminal device requests to access.

It should be understood that the communication apparatus 1100 herein is embodied in a form of a functional module. The term "module" herein may be an application-specific integrated circuit (application-specific integrated circuit, ASIC), an electronic circuit, a processor (for example, a shared processor, a dedicated processor, or a group processor) configured to execute one or more software or firmware programs, a memory, a combinational logic circuit, and/or another suitable component that supports the described function.

The communication apparatus 1100 has a function of implementing corresponding steps performed by the first device or the second device in the foregoing method. The foregoing function may be implemented by using hardware, or may be implemented by hardware by executing corresponding software. The hardware or the software includes one or more modules corresponding to the function.

In this embodiment of this application, the communication apparatus 1100 in FIG. 11 may alternatively be a chip or a chip system, for example, a system-on-chip (system-on-chip, SoC). This is not limited in this application.

FIG. 12 is a block diagram of another communication apparatus 1200 according to an embodiment of this application. The apparatus 1200 includes a processor 1210, a memory 1220, and a transceiver 1230. The processor 1210, the memory 1220, and the transceiver 1230 are connected through an internal connection path. The memory 1220 is configured to store instructions. The processor 1210 is configured to execute the instructions stored in the memory 1220, to enable the apparatus 1200 to perform any method provided in the foregoing method embodiment.

It should be understood that a function of the apparatus 1100 in the foregoing embodiment may be integrated into the apparatus 1200. The apparatus 1200 may be configured to perform steps and/or procedures corresponding to the first device in the foregoing method embodiment; or the apparatus 1200 may be further configured to perform steps and/or procedures corresponding to the second device in the foregoing method embodiment; or the apparatus 1200 may be further configured to perform steps and/or procedures corresponding to the terminal device in the foregoing method embodiment. Optionally, the memory 1220 may include a read-only memory and a random access memory, and provide the instructions and data to the processor. A part of the memory may further include a non-volatile random access memory. For example, the memory may further store information about a device type. The processor 1210 may be configured to execute the instructions stored in the memory. When the processor executes the instructions, the processor 1210 may perform the steps and/or procedures corresponding to the first device, the second device, or the terminal device in the foregoing method embodiment.

It should be understood that, in this embodiment of this application, the processor 1210 may be a central processing unit (central processing unit, CPU), or the processor 1210 may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The processor 1210 may be a microprocessor, or the processor 1210 may be any conventional processor or the like.

In an implementation process, steps in the foregoing method embodiment may be implemented by using an integrated logical circuit of hardware in the processor, or by using instructions in a form of software. The steps of the methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and the processor executes the instructions in the memory and completes the steps in the foregoing methods in combination with hardware of the processor. To avoid repetition, details are not described herein again.

This application further provides a computer-readable medium storing a computer program. When the computer program is executed by a computer, a function of any one of the foregoing method embodiments is implemented.

This application further provides a computer program product. When the computer program product is executed by a computer, a function of any one of the foregoing method embodiments is implemented.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for a purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in an electronic form, a mechanical form, or another form.

The units described as separate components may or may not be physically separate, and components displayed as units may or may not be physical units, in other words, may be located in one position, or may be distributed on a plurality of network units. Some or all of the units may be selected based on an actual requirement to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to a conventional technology, or a part of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The storage medium includes any medium that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first device, and comprising:
receiving a first request message from a terminal device, wherein the first request message comprises a first identifier, and the first identifier identifies a type of an application that the terminal device requests to access; and
sending a second request message to a second device based on an identifier of the terminal device, the first identifier, and a first mapping relationship, wherein the second request message comprises a second identifier, the second device and the second identifier are determined based on the first mapping relationship, the first mapping relationship indicates a correspondence between the identifier of the terminal device, the first identifier, the second identifier, and the second device, the second identifier identifies that access of the terminal device to a target server is continuous access, and the target server is a server that processes the request message.

2. The method according to claim 1, wherein before the receiving a first request message from a terminal device, the method further comprises:
receiving a third request message from the terminal device, wherein the third request message comprises the first identifier;
determining the second identifier based on the first identifier;
determining the second device based on the first identifier, computing power information, and network information; and
sending a fourth request message to the second device, wherein the fourth request message comprises the second identifier.

3. The method according to claim 2, wherein the determining the second identifier based on the first identifier comprises:
determining the second identifier based on the first identifier and first preconfiguration information, wherein the first preconfiguration information indicates a correspondence between a continuously accessed application and a type of the application; or
determining the second identifier based on the first identifier, the identifier of the terminal device, and second preconfiguration information, wherein the second preconfiguration information indicates a correspondence between a continuously accessed application, a type of the application, and a terminal device.

4. The method according to claim 1, wherein
the first mapping relationship is from a session management function SMF, and the SMF is an SMF serving the terminal device; or
the first mapping relationship is from a third device, and the third device is a device to which the terminal device is connected when the terminal device accesses the target server last time.

5. The method according to any one of claims 1 to 4, wherein the identifier of the terminal device comprises: a media access control MAC address of the terminal device, an international mobile equipment identity IMEI of the terminal device, a subscription permanent identifier SUPI of the terminal device, or an identifier of a protocol data unit PDU session used by the terminal device to access the target server.

6. A communication method, applied to a terminal device, wherein the method comprises:
generating a first request message, wherein the first request message comprises a second identifier, the second identifier identifies that access of the terminal device to a target server is continuous access, and the target server is a server that processes the request message; and
sending the first request message to a first device.

7. The method according to claim 6, wherein the method further comprises:
receiving a first message, wherein the first message indicates that an application identified by a first identifier is a continuously accessed application;
determining the second identifier based on an identifier of the terminal device and the first message; and
sending a second request message to the first device, wherein the second request message comprises the first identifier and the second identifier.

8. A communication method, applied to a first device, and comprising:
receiving a first request message from a terminal device, wherein the first request message comprises a second identifier, the second identifier identifies that access of the terminal device to a target server is continuous access, and the target server is a server that processes the request message; and
sending the first request message to a second device based on the second identifier and a third mapping relationship, wherein the third mapping relationship indicates a correspondence between the second identifier and the second device.

9. The method according to claim 8, wherein the method further comprises:
receiving a second request message from the terminal device, wherein the second request message comprises a first identifier and the second identifier, and the first identifier identifies a type of an application that the terminal device requests to access;
determining the second device based on the first identifier, computing power information, and network information; and
sending the second request message to the second device.

10. The method according to claim 8, wherein the third mapping relationship is from a session management function SMF, and the SMF is an SMF serving the terminal device; or
the third mapping relationship is from a third device, and the third device is a device to which the terminal device is connected when the terminal device accesses the target server last time.

11. A communication method, applied to a second device, wherein the method comprises:
receiving a second request message from a first device, wherein the second request message comprises a second identifier, the second identifier identifies that access of a terminal device to a target server is continuous access, and the target server is a server that processes the request message; and
sending the second request message to the target server based on the second identifier and a second mapping relationship, wherein the second mapping relationship indicates a correspondence between the second identifier and the target server.

12. The method according to claim 11, wherein the method further comprises:
receiving a fourth request message from the first device, wherein the fourth request message comprises a first identifier and the second identifier, and the first identifier identifies a type of an application that the terminal device requests to access;
determining the target server based on the first identifier, computing power information, and network information; and
sending the fourth request message to the target server.

13. A communication apparatus, comprising a module configured to perform the method according to any one of claims 1 to 12.

14. A communication apparatus, comprising a processor and a memory, wherein the processor is coupled to the memory, the memory is configured to store instructions, and when the instructions are executed by the processor, the apparatus is enabled to perform the method according to any one of claims 1 to 12.

15. A computer-readable storage medium, wherein the computer-readable storage medium stores a computer program, and when the computer program is executed by a processor, the method according to any one of claims 1 to 12 is implemented.

16. A computer program product, comprising a computer program, wherein when the computer program is run, the method according to any one of claims 1 to 12 is implemented.
